Europäisches Patentamt

European Patent Office

Office européen des brevets

(19)

(11) EP 0 503 393 B1

(12) **EUROPÄISCHE PATENTSCHRIFT**

(45) Veröffentlichungstag und Bekanntmachung des Hinweises auf die Patenterteilung:
**27.08.1997 Patentblatt 1997/35**

(51) Int Cl.6: **C08G 65/20**

(21) Anmeldenummer: **92103412.0**

(22) Anmeldetag: **28.02.1992**

(54) **Verfahren zur Herstellung von Polyoxyalkylenglykol-Monoethern von einwertigen Alkoholen**

Process for preparing polyoxyalkyleneglycol monoethers of monohydric alcohols

Procédé pour la préparation de (monoéthers de polyoxyalkylèneglycol) d'alcools monohydroxyliques

(84) Benannte Vertragsstaaten:
**BE DE ES FR GB IT NL**

(30) Priorität: **13.03.1991 DE 4108045**

(43) Veröffentlichungstag der Anmeldung:
**16.09.1992 Patentblatt 1992/38**

(73) Patentinhaber: **BASF Aktiengesellschaft
67063 Ludwigshafen (DE)**

(72) Erfinder:
- **Weyer, Hans-Jürgen, Dr.
  W-6800 Mannheim 1 (DE)**
- **Fischer, Rolf, Dr.
  W-6900 Heidelberg (DE)**
- **Jeschek, Gerhard, Dr.
  W-6718 Grünstadt (DE)**
- **Müller, Herbert, Dr.
  W-6710 Frankenthal (DE)**

(56) Entgegenhaltungen:
**EP-A- 239 787**  **EP-A- 0 064 236**
**EP-A- 0 336 171**  **EP-A- 0 382 931**
**JP-A-60 203 633**  **JP-A-61 120 830**
**JP-A-61 123 627**  **JP-A-61 123 628**
**JP-A-61 126 134**  **JP-A-61 268 727**
**US-A- 4 658 065**

- **DATABASE WPIL Week 8539, 19. August 1985 Derwent Publications Ltd., London, GB; AN 85-240385**
- **PATENT ABSTRACTS OF JAPAN vol. 11, no. 282 (C-446)11. September 1987**
- **PATENT ABSTRACTS OF JAPAN vol. 12, no. 349 (C-529)20. September 1988**
- **PATENT ABSTRACTS OF JAPAN vol. 9, no. 5 (C-260)10. Januar 1985**
- **DIE MAKROMOLEKULARE CHEMIE, 190, Nr 5, 1989, S.929-938**

Bemerkungen:
Die Akte enthält technische Angaben, die nach dem Eingang der Anmeldung eingereicht wurden und die nicht in dieser Patentschrift enthalten sind.

EP 0 503 393 B1

**Beschreibung**

Die vorliegende Erfindung betrifft ein Verfahren zur Herstellung von Polyoxyalkylenglykol-Monoethern von einwertigen Alkoholen.

Polyetherglykol-Monoether werden nach den Angaben von JP-A 105 029/1988 über die kationische Ringöffnungspolymerisation von cyclischen Ethern, wie Tetrahydrofuran, in Gegenwart von einwertigen Alkoholen mit Hilfe von Lewis-Säure-Katalysatoren hergestellt. Beispiele für solche Katalysatoren sind Bortrifluorid, Antimonpentafluorid und Aluminiumtrichlorid. Zur Initiierung der Polymerisationsreaktion muß zusätzlich noch ein 3- oder 4-gliedriger Ether zugesetzt werden, beispielsweise ein Epoxid oder Oxetan. Nachteilig an diesem Verfahren ist, daß sich die Polymerisation bei diesem Verfahren nicht kontinuierlich durchführen läßt und die Lewis-Säure-Katalysatoren nicht wiederverwendet werden können. Darüber hinaus sind diese Lewis-Säuren hochkorrosiv, so daß die damit in Kontakt kommenden Apparaturen aus besonders korrosionsbeständigen Spezialwerkstoffen gebaut sein müssen, wodurch das Verfahren beträchtlich verteuert wird. Der gravierenste Nachteil dieses Verfahrens ist allerdings darin zu sehen, daß die danach produzierten Polyetherglykolmonoether eine breite Molekulargewichtsverteilung haben. In vielen Anwendungsgebieten werden aber Polyetherglykol-Monoether mit einer engen Molekulargewichtsverteilung benötigt.

JP-A 159 824 (1984) beschreibt ein Verfahren zur Polymerisation cyclischer Ether mit Hilfe wasserhaltiger Heteropolysäure-Katalysatoren in Gegenwart von Alkoholen. Nach den Angaben dieser Schrift können allerdings nur relativ kurzkettige Polymere erhalten werden. Bei einem nach den Vorgaben dieser Schrift durchgeführten Versuch zur Herstellung von Polytetrahydrofuran-Monoisopropylether konnte kein polymeres Produkt isoliert werden.

US-A 46 58 065 betrifft ein Verfahren zur Herstellung von Polyetherpolyolen, wobei Tetrahydrofuran mit mehrwertigen Alkoholen mit Hilfe wasserhaltiger Heteropolysäure-Katalysatoren copolymerisiert wird. Außerdem wird in dieser Patentschrift vorgeschlagen, Polyoxyalkylenglykol-Monoether durch die Umsetzung der betreffenden cyclischen Ether mit einwertigen Alkoholen und mit wasserhaltigen Heteropolysäure-Katalysatoren und/oder wasserhaltigen Reaktanten herzustellen. Unter nach der Lehre dieses Patents angewandten Reaktionsbedingungen erhält man jedoch nur schwer trennbare Gemische aus den betreffenden Polyoxyalkylenglykolen und Polyoxyalkylenglykol-Monoethern, welche zudem eine breite Molekulargewichtsverteilung haben.

EP-A- 239 787 beschreibt die Herstellung von Polyoxyalkylenglykol-Monoethern mit enger Molekulargewichtsverteilung und niedriger Farbzahl durch Polymerisation von THF in Gegenwart von einwertigen Alkoholen an festen Bleicherde - oder Zeolith - Katalysatoren, die einen Wassergehalt von unter 0.5 Gew.% aufweisen.

Der vorliegenden Erfindung lag daher die Aufgabe zugrunde, ein wirtschaftliches Verfahren zur Herstellung von Polyoxyalkylenglykol-Monoethern von einwertigen Alkoholen auf der Basis des Monomeren Tetrahydrofuran zu finden, das es ermöglicht diese Polymere mit mittleren Molmassen von mehr als 500 Dalton und insbesondere mit mittleren Molmassen von 600 bis 3500 Dalton und mit einer engen Molekulargewichtsverteilung herzustellen. Darüber hinaus sollte dieses Verfahren zur kontinuierlichen Produktion dieser Polymere geeignet sein, und die danach hergestellten Polymere sollten möglichst farblos sein oder zumindest der Anforderung einer niederen Farbzahl genügen.

Dementsprechend wurde ein Verfahren zur Herstellung von Polyoxialkylenglykol-Monoethern von einwertigen Alkoholen gefunden, das dadurch gekennzeichnet ist, daß man Tetrahydrofuran oder Mischungen von Tetrahydrofuran mit insgesamt bis zu 95 mol-%, bezogen auf die eingesetzte Menge an Tetrahydrofuran, eines oder mehrerer Comonomerer aus der Gruppe der cyclischen Ether und Acetale in Abwesenheit von Wasser und in Gegenwart eines einwertigen Alkohols und eines gelösten Wasserfreien Heteropolysäure-Katalysators in einem homogenen flüssigen Zweiphasensystem polymerisiert.

Das erfindungsgemäße Verfahren dient somit zur Herstellung von Polyoxyalkylenglykolen auf der Basis von Tetrahydrofuran (THF), welche am einen Ende der Polyoxyalkylenglykol-Kette mit einem einwertigen Alkohol verethert sind.

Solche auf der Basis des Monomeren THF hergestellte Polyoxyalkylenglykol-Monoether können, soweit es deren Polyoxyalkylenglykol-Teil betrifft, aus THF oder aus THF und comonomeren, cyclischen Ethern und/oder Acetalen durch Ringöffnungspolymerisation hergestellt werden. Beispielsweise seien Ethylenoxid, Propylenoxid und andere substituierte Epoxide, wie Epichlorhydrin, 1,2-Butylenoxid, 2,3-Butylenoxid, Isobutylenoxid, Oxetan und Oxetanderivate, wie 3,3-Dimethyloxetan, 3,3-Bis-chlormethyl-oxetan, 5-gliedrige, cyclische Ether und Acetale, wie Methyltetrahydrofurane, 1,3-Dioxolan, 6-gliedrige, cyclische Ether, wie Tetrahydropyran, 1,4-Dioxan, 1,3-Dioxan, 7- und höhergliedrige, cyclische Ether, wie Oxepan, Kronenether und cyclische Oligomere des Tetrahydrofurans genannt. Selbstverständlich können auch Mischungen dieser Comonomere mit THF polymerisiert werden.

Im allgemeinen werden die Comonomeren in Mengen von insgesamt bis zu 95 mol-%, bevorzugt von 0,1 bis 70 mol-%, insbesondere von 1 bis 30 mol-%, bezogen auf eingesetztes THF, verwendet. Besonders bevorzugt werden nach dem erfindungsgemäßen Verfahren jedoch Poly-THF-Monoether von einwertigen Alkoholen allein aus dem Monomer THF hergestellt.

Als Heteropolysäuren im Sinne der vorliegenden Erfindung werden anorganische Polysäuren mit mindestens 2 verschiedenen Zentralatomen verstanden, welche aus schwachen, mehrbasischen Sauerstoffsäuren eines Metalls, vorzugsweise aus den Sauerstoffsäuren des Chroms, Molybdäns, Vanadiums oder Wolframs und/oder den entsprechenden Oxiden dieser Metalle $CrO_3$, $MoO_3$, $V_2O_5$ bzw. $WO_3$ und denen eines anderen Metalls oder Nichtmetalls, beispielsweise Arsen, Bor, Jod, Phosphor, Selen, Silicium, Germanium oder Tellur, als gemischte, partielle Anhydride entstehen. In der Regel hat das Atomverhältnis zwischen den erstgenannten und den letztgenannten Elementen in diesen Heteropolysäuren den Wert 2,5 bis 12, vorzugsweise ist der Wert dieses Atomverhältnisses 9 oder 12.

Als Heteropolysäuren, welche im erfindungsgemäßen Verfahren Einsatz finden können, seien die folgenden Verbindungen beispielhaft genannt:

Dodecamolybdatophosphorsäure ($H_3PMo_{12}O_{40}\cdot nH_2O$), Dodecamolybdatokieselsäure ($H_4SiMo_{12}O_{40}\cdot nH_2O$), Dodecamolybdatocer(IV)säure ($H_8CeMo_{12}O_{42}\cdot nH_2O$), Dodecamolybdatoarsen(V)säure($H_3AsMo_{12}O_{40}\cdot nH_2O$), Hexamolybdatochrom(III)säure($H_3CrMo_6O_{24}H_6\cdot nH_2O$), Hexamolybdatonikkel(II)säure($H_4NiMo_6O_{24}H_6\cdot 5H_2O$), Hexamolybdatojodsäure($H_5JMo_6O_{24}\cdot nH_2O$), Octadecamolybdatodiphosphorsäure($H_6P_2Mo_{18}O_{62}\cdot 11H_2O$), Octadecamolybdatodiarsen(V)säure ($H_6As_2Mo_{18}O_{62}\cdot 25H_2O$), Nonamolybdatomangan(IV)säure ($H_6MnMo_9O_{32}\cdot nH_2O$), Undecamolybdatovanadatophosphorsäure($H_4PMo_{11}VO_{40}\cdot nH_2O$), Decamolybdatodivanadatophosphorsäure($H_5Mo_{10}V_2O_{40}\cdot nH_2O$), Dodecavanadatophosphorsäure ($H_7PV_{12}O_{36}\cdot nH_2O$), Dodecawolframatokieselsäure($H_4SiW_{12}O_{40}\cdot 7H_2O$), Dodecawolframatophosphorsäure($H_3PW_{12}O_{40}\cdot nH_2O$), Dodecawolframatoborsäure ($H_5BW_{12}O_{40}\cdot nH_2O$), Octadecawolframatodiphosphorsäure($H_6P_2W_{18}O_{62}\cdot 14H_2O$), Octadecawolframatodiarsen(V)säure($H_6As_2W_{18}O_{62}\cdot 14H_2O$), Hexamolybdatohexawolframatophosphorsäure($H_3PMo_6W_6O_{40}\cdot nH_2O$). Selbstverständlich können auch Mischungen von Heteropolysäuren eingesetzt werden. Vorzugsweise werden im erfindungsgemäßen Verfahren aufgrund ihrer einfachen Zugänglichkeit Dodecawolframatophosphorsäure, Dodecamolybdatophosphorsäure, Nonamolybdatophosphorsäure, Dodecamolybdatokieselsäure und Dodecawolframatokieselsäure eingesetzt.

Bevorzugt werden die freien Heteropolysäuren erfindungsgemäß angewandt, es ist aber auch möglich, deren Salze, insbesondere deren Alkalimetall- und Erdalkalimetallsalze als Katalysatoren zu benutzen. Die Heteropolysäuren und deren Salze sind bekannte Verbindungen und können nach bekannten Verfahren, beispielsweise nach den Methoden von Brauer (Herausgeber): Handbuch der Präparativen, Anorganischen Chemie, Band III, S. 1774-1798, Enke, Stuttgart, 1981 oder nach den Verfahren von Top. Curr. Chem. 76, 1 (1978), hergestellt werden.

Die so hergestellten Heteropolysäuren liegen im allgemeinen in hydratisierter Form vor und werden vor ihrer Verwendung im erfindungsgemäßen Verfahren vom darin enthaltenen, koordinativ gebundenen Wasser befreit. Diese Dehydratisierung kann vorteilhaft thermisch, beispielsweise nach dem Verfahren von Makromol. Chem. 190, 929 (1989) durchgeführt werden. Eine andere Möglichkeit zur Dehydratisierung der Heteropolysäuren besteht je nach verwendeter Heteropolysäure darin, daß man die Heteropolysäure in einem organischen Lösungsmittel, beispielsweise in einem Dialkylether oder Alkohol, löst, das Wasser mit dem organischen Lösungsmittel aus seiner koordinativen Bindung mit der Heteropolysäure verdrängt und azeotrop mit dem Lösungsmittel abdestilliert. Nach diesen Methoden hergestellte, wasserfreie Heteropolysäuren können als Katalysator direkt in das erfindungsgemäße Verfahren eingeführt werden.

Die Heteropolysäure-Katalysatoren können auch in Form von Heterogenkatalysatoren im erfindungsgemäßen Verfahren verwendet werden. Dazu wird zweckmäßigerweise die Heteropolysäure auf ein unter den Reaktionsbedingungen inertes Trägermaterial, wie Aktivkohle, Siliciumdioxid, Titandioxid oder Zirkoniumdioxid, nach an sich herkömmlichen Methoden aufgebracht, beispielsweise indem man das betreffende Trägermaterial mit einer Lösung der Heteropolysäure in einem Lösungsmittel, vorzugsweise einem organischen Lösungsmittel, tränkt und anschließend bei Temperaturen von 100 bis 300, vorzugsweise 130 bis 250°C unter reduziertem Druck so lange trocknet, bis kein Wasser mehr im Katalysator nachweisbar ist.

Im erfindungsgemäßen Verfahren sind prinzipiell alle Arten von einwertigen Alkoholen einsetzbar, wie aliphatische, cycloaliphatische, beispielsweise Cyclohexanol, aromatische und araliphatische Alkohole, beispielsweise Benzylalkohol. Diese können weiterhin noch unter den Reaktionsbedingungen inerte Substituenten wie Alkylgruppen, Halogenatome oder Alkoxygruppen tragen. Desgleichen können ungesättigte, aliphatische oder cycloaliphatische Alkohole, beispielsweise Crotylalkohol oder Cyclohexenol, umgesetzt werden. Vorzugsweise werden im erfindungsgemäßen Verfahren jedoch einwertige, aliphatische $C_1$- bis $C_{18}$-Alkohole, insbesondere $C_1$- bis $C_8$-Alkohole, benutzt. Besonders bevorzugt ist die Verwendung einwertiger $C_1$- bis $C_4$-Alkohole, wie Methanol, Ethanol, Propanol, Isopropanol und tert. Butanol.

Unter der Bezeichnung "mittleres Molekulargewicht" oder "mittlere Molmasse" wird in dieser Anmeldung das Zahlenmittel $M_n$ des Molekulargewichts der im gebildeten Polymerisat enthaltenen Polymeren verstanden.

Der Alkoholgehalt der Reaktionsmischung beeinflußt das mittlere Molekulargewicht des entstehenden Polymerisates. In der Regel gilt, daß je höher der Gehalt an einwertigem Alkohol in der Reaktionsmischung ist, desto niedriger das mittlere Molekulargewicht des entstehenden Polymerisates ausfällt. Dementsprechend nimmt das mittlere Molekulargewicht des erzeugten Polymeren bei abnehmendem Alkoholgehalt der Reaktionsmischung zu. Bei sehr geringem Alkoholgehalten können vermehrt cyclische Oxyalkylenoligomere gebildet werden.

Des weiteren beeinflußt der Alkoholgehalt der Reaktionsmischung deren Phasenverhalten. Bei hohen Alkoholgehalten besteht die Reaktionsmischung aus einer homogenen Phase, wodurch später bei der Aufarbeitung die Abtrennung des Katalysators erschwert werden kann. Bei sehr niedrigen Alkoholgehalten wird die Heteropolysäure nicht mehr vollständig von der Reaktionsmischung gelöst. Vorzugsweise wird im erfindungsgemäßen Verfahren mit solchen Alkoholgehalten der Reaktionsmischung gearbeitet, bei denen sich zwei homogene, flüssige Phasen im Reaktionsgemisch bilden, wobei die schwerere, untere Phase den größten Teil des Heteropolysäure-Katalysators und des Alkohols neben monomerem Ausgangsmaterial und frisch gebildetem Polymer enthält und wobei die leichtere, obere Phase neben Restmengen an Alkohol und Katalysator im wesentlichen aus dem monomeren Ausgangsmaterial und darin gelöstem Polymer zusammengesetzt ist.

Zweckmäßigerweise arbeitet man insbesondere bei der diskontinuierlichen Ausgestaltung des erfindungsgemäßen Verfahrens mit Alkoholgehalten von 0,1 bis 15 mol, vorzugsweise mit 1 bis 8 mol Alkohol/mol Heteropolysäure. Da bei der kontinuierlichen Betriebsweise des erfindungsgemäßen Verfahrens ein Teil des in der oberen, im wesentlichen Produkt- und Monomerhaltigen Phase gelösten Alkohols laufend, zusammen mit dem Produkt aus dem Reaktor ausgetragen wird, der in der unteren, im wesentlichen Katalysator-haltigen Phase befindliche Alkohol aber bei der Herstellung des Polyoxyalkylenglykol-Monoethers verbraucht wird, ist es vorteilhaft, die Alkoholzufuhr zur Reaktionsmischung zwecks Ergänzung des verbrauchten und ausgetragenen Alkohols so zu steuern, daß sich die obengenannten Konzentrationsverhältnisse in der Katalysatorphase einstellen. Unter diesen Bedingungen bildet sich das oben beschriebene Reaktionssystem aus zwei homogenen, flüssigen Phasen aus, in dem Polyoxyalkylenglykol-Monoether praktisch beliebiger mittlerer Molmassen, insbesondere jedoch solche Polyoxyalkylenglykol-Monoether mit mittleren Molmassen von mehr als 500 Dalton und besonders bevorzugt die Polyoxyalkylenglykol-Monoether -Monoether mit den wirtschaftlich besonders wichtigen mittleren Molmassen im Bereich von 600 bis 3500 Dalton, gezielt und mit guter Selektivität hergestellt werden können.

Es wurde gefunden, daß es zur Herstellung von Polyoxyalkylenglykol-Monoethern bestimmter mittlerer Molmassen und einer engen Molekulargewichtsverteilung insbesondere beim kontinuierlichen Verfahren vorteilhaft ist, daß die zur Herstellung eines solchen Polymeren erforderliche Alkoholkonzentration in der Katalysatorphase soweit als möglich konstant gehalten wird. Es wird daher im kontinuierlichen Verfahren vorteilhaft so vorgegangen, daß der Alkohol im Reaktionsgemisch, entsprechend seinem Verbrauch bei der Umsetzung, unter Berücksichtigung des zusammen mit der Produkthaltigen Oberphase ausgetragenen Alkohols, laufend durch Zuführung frischen oder rückgeführten Alkohols in der Weise ergänzt wird, daß die Alkohol konzentration in der Katalysatorphase weitgehend konstant gehalten wird. Bei der diskontinuierlichen Ausgestaltung des erfindungsgemäßen Verfahrens wirken sich die obengenannten Faktoren naturgemäß in der Regel nicht so kritisch auf das Verfahrensergebnis aus wie im kontinuierlichen Verfahren.

Allerdings stand bislang kein verläßliches Verfahren zur Verfügung, nach dem die Alkohol konzentration in der konzentrierten, Heteropolysäure-haltigen Katalysatorphase gemessen werden konnte, insbesondere gab es kein Meßverfahren, nach dem die Alkoholkonzentration in dieser Katalysatorphase hinreichend schnell und genau gemessen werden konnte, um die Zufuhr frischen Alkohols entsprechend den Anforderungen eines kontinuierlichen, industriellen Verfahrens über eine damit gekoppelte Analogsteuerung regeln zu können.

Es wurde gefunden, daß die Konzentration des Alkohols in der Katalysatorphase vorteilhaft durch die Messung der elektrischen Leitfähigkeit der flüssigen Katalysatorphase ermittelt werden kann. Die Messung der elektrischen Leitfähigkeit kann beispielsweise mit Hilfe der Techniken, Schaltungen und Meßanordnungen, wie sie beispielsweise von T. und L. Shedlovsky in A. Weissberger, B.W. Rossiter (Ed.) Techniques of Chemistry, Band I, Seite 163-204, Wiley-Interscience, New York, 1971, beschrieben sind, im erfindungsgemäßen Verfahren durchgeführt werden. Die Konzentration des betreffenden Alkohols in der Katalysatorphase läßt sich einfach mit Hilfe des erhaltenen Leitfähigkeitsmeßwertes anhand einer vorher aufgestellten Eichkurve feststellen. In der Regel ist es zweckmäßig, für die unterschiedlichen, angewandten Alkohol-Heteropolysäure-Systeme individuelle Eichkurven zu erstellen. Da die Leitfähigkeitsmessung ein elektrisches Meßverfahren ist, kann die Meßeinrichtung sehr einfach mit der Alkoholdosiervorrichtung zum Zwecke der Analogsteuerung der Alkoholzugabe gekoppelt werden. Dieses kombinierte Meß- und Dosierverfahren wirkt sich, insbesondere bei der kontinuierlichen Ausgestaltung des erfindungsgemäßen Verfahrens, sehr vorteilhaft auf die Produktqualität aus.

Das mittlere Molekulargewicht des im erfindungsgemäßen Verfahren gebildeten Polyoxyalkylen-Monoethers ist nicht allein von der Menge des zugesetzten Heteropolysäurekatalysators und des Alkohols abhängig, sondern wird auch von der Art der verwendeten Heteropolysäure bzw. des eingesetzten Alkohols beeinflußt.

Beispielsweise wird unter ansonsten gleichen Bedingungen bei der Umsetzung von THF und Isopropanol mit wasserfreier Dodecawolframatophosphorsäure ein Polymer mit einer mittleren Molmasse von 1900 gefunden, wohingegen bei der Verwendung von Dodecawolframatokieselsäure ein Polymer mit einer mittleren Molmasse von 1500 gebildet wird und bei Verwendung von Ethanol als einwertigem Alkohol wird Poly-THF-Monoethylether der mittleren Molmasse 1900 erhalten, dieweil mit Hexadecanol-1 ein Poly-THF-Monohexadecylether der mittleren Molmasse 3600 entsteht.

Durch die Variierung der Menge und Art der verwendeten Heteropolysäure bzw. des einwertigen Alkohols lassen sich so Polyoxyalkylenglykol-Monoether mit einem bestimmten mittleren Molekulargewicht und gleichzeitig einer relativ engen Molekulargewichtsverteilung maßgeschneidert herstellen. Die Einstellung dieser Verfahrensparameter läßt sich in der Regel mit einigen wenigen Routineversuchen optimieren.

Das erfindungsgemäße Verfahren kann sowohl kontinuierlich als auch diskontinuierlich ausgeführt werden. Zweckmäßigerweise wird dazu die Heteropolysäure in Mengen von 10 bis 300 Gew.-Teilen, vorzugsweise von 50 bis 150 Gew.-Teilen, bezogen auf 100 Gew.-Teile des verwendeten Monomeren, eingesetzt. Es ist auch möglich größere Mengen an Heteropolysäure zum Reaktionsgemisch zu geben.

Die Heteropolysäure kann in fester Form der Umsetzung zugeführt werden, worauf sie durch das Inkontaktbringen mit den weiteren Reaktanten nach und nach unter Ausbildung der flüssigen Katalysatorphase solvatisiert wird. Man kann auch so verfahren, daß man die feste Heteropolysäure mit dem zu verwendenden Alkohol und/oder dem zu verwendenden Monomer anmaischt und die dabei erhaltene Katalysatorlösung als flüssige Katalysatorphase in den Reaktor leitet. Dabei kann sowohl die Katalysatorphase als auch das monomere Ausgangsmaterial im Reaktor vorgelegt werden. Es können aber auch beide Komponenten gleichzeitig in den Reaktor eingeleitet werden.

Die Polymerisation wird üblicherweise bei Temperaturen von 0 bis 150°C, vorzugsweise bei 30 bis 80°C vorgenommen. Vorteilhaft wird dabei unter Atmosphärendruck gearbeitet, die Umsetzung unter Druck, vornehmlich unter dem Eigendruck des Reaktionssystems, kann sich aber gleichfalls als zweckmäßig und vorteilhaft erweisen.

Da die Polymerisation bevorzugt in einem Zweiphasensystem durchgeführt wird, muß für eine gute Durchmischung der beiden Phasen gesorgt werden. Dazu ist es erforderlich, daß die Reaktoren sowohl bei der chargenweisen als auch bei der kontinuierlichen Verfahrensweise mit leistungsfähigen Mischeinrichtungen, beispielsweise Rührwerken, ausgestattet sind. Beim diskontinuierlichen Verfahren wird dazu in der Regel ein Rührkessel verwendet, wobei die beiden flüssigen Phasen nach beendeter Umsetzung voneinander getrennt werden.

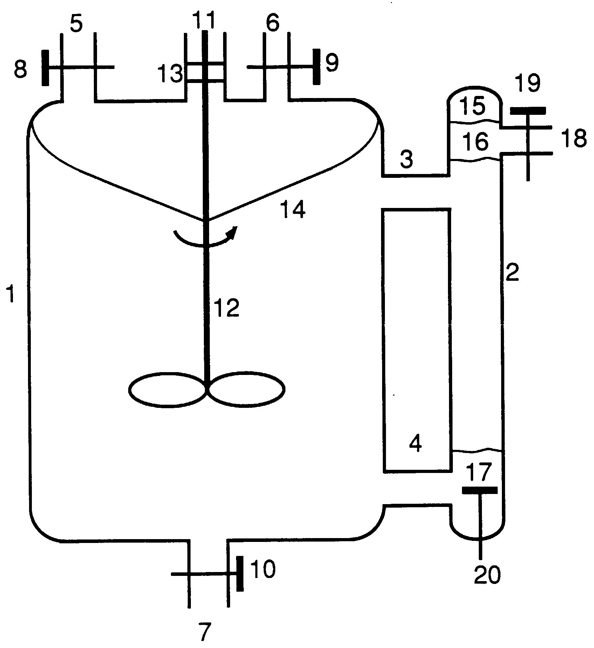

Bevorzugt wird jedoch die kontinuierliche Verfahrensweise angewandt. Dabei kann die Umsetzung in herkömmlichen, für kontinuierliche Verfahren geeigneten Reaktoren oder Reaktoranordnungen, beispielsweise in Rohrreaktoren, welche mit Innenausbauten ausgestattet sind, die eine gute Durchmischung des Zweiphasensystems gewährleisten oder aber auch in Rührkesselkaskaden ausgeführt werden, wobei sich an die Umsetzung noch die kontinuierliche Abscheidung der Katalysatorphase von der Monomer- und Produkt-haltigen Oberphase anschließt. Vorteilhaft wird im erfindungsgemäßen Verfahren eine Apparatur eingesetzt, wie sie in der Figur schematisch dargestellt ist.

Bei dieser Apparatur handelt es sich um einen mit einem Phasenabscheider 2 kombinierten Rührkessel 1, von ansonsten an und für sich herkömmlicher Bauart, der entweder mit Außen- oder Innenheizung ausgerüstet sein kann und mit in der Regel separaten Einlaßstutzen 5 für die Zuleitung der einzelnen Reaktanten und die Begasung mit Inertgas versehen ist. In der Figur wurde der übersichtlichkeit wegen auf die Darstellung der Kesselheizung verzichtet und nur ein Einlaßstutzen 5, stellvertretend für alle weiteren, eingezeichnet. Des weiteren sind an den Reaktor eine Vorrichtung zum Druckausgleich 6 und ein Ablaßstutzen 7 angebaut. Alle diese Vorrichtungen sind mit separaten Steuervorrichtungen 8,9 und 10, beispielsweise Schiebern oder Ventilen, versehen, welche das Öffnen und Schließen dieser Stutzen sowie die Regelung des Zulaufs ermöglichen. Der Reaktor ist mit einem Rührwerk 12 versehen, welches durch die mit der Buchse 13 abgedichtete Führung 11 nach außen verbunden ist. Mit dem Phasenabscheider 2 steht der Rührkessel 1 über die etwa in Höhe des oberen bzw. unteren Drittels angebrachten Zuführungen 3 bzw. 4 in Verbindung. Die bei der Umsetzung erhaltene Produktlösung wird über den Auslaßstutzen 18, welcher zweckmäßigerweise oberhalb der Zuführung 3 angebracht ist, aus der Apparatur abgezogen. Der Abfluß der Produktlösung wird über die Steuervorrichtung 19, die z.B. ein Schieber oder ein Ventil sein kann, geregelt.

Zum Betrieb dieser kontinuierlichen Apparatur werden die Reaktanten im Reaktor vorgelegt und bei der gewünschten Reaktionstemperatur mit dem Rührwerk 12 intensiv durchmischt, wobei eine emulsionsartige Mischung aus Katalysatorphase und Oberphase entsteht. Die durch das Rührwerk im Reaktionsgemisch erzeugte Strömung hat zur Folge, daß die emulsionsartige Mischung über die Zuführung 3 in den Phasenabscheider 2 gelangt, worin sich die Katalysatorphase und die Monomer- und Produkt-haltige Oberphase aufgrund ihrer unterschiedlichen Dichten entmischen. Dabei scheiden sich etwa oberhalb der gestrichelten Linie 16 und unterhalb der gestrichelten Linie 17 aus der trüben, emulsionsartigen Reaktionsmischung die klare, farblose, Produkt-haltige Oberphase bzw. die je nach verwendeter Heteropolysäure unterschiedlich gefärbte, klare Katalysatorphase ab. Die Produktphase wird über den Auslaß 18 abgezogen, dieweil die Katalysatorphase über die Zuführung 4 infolge des vom Rührwerk 12 erzeugten Sogs wieder in den Rührkessel zurückfließt und dort erneut mit der Monomer- und Produkt-haltigen Oberphase verwirbelt wird. Die Linien 14 und 15 bezeichnen den ungefähren Flüssigkeitsmeniskus bzw. -pegel in Rührkessel bzw. Phasenabscheider im Betrieb. über die Einfüllstutzen 5 wird frisches Monomer und frischer Alkohol in den Rührkessel eingetragen. Dabei wird die Alkoholzufuhr mit Hilfe der in die flüssige Katalysatorphase eintauchenden Leitfähigkeitsmeßzelle 20 so gesteuert, daß der gewünschte Alkoholgehalt in der Katalysatorphase im Rahmen der Regelgenauigkeit konstant bleibt.

Frisches Monomer wird üblicherweise über eine Füllstandsregelung gesteuert in den Reaktor eindosiert. Zweckmäßigerweise wird frisches Monomer in dem Maße zugeführt, wie Produkt und nicht umgesetztes Monomer aus der Reaktionsapparatur ausgetragen werden. Auf diese Weise kann auch die Verweilzeit, mithin die Polymerisationszeit, gesteuert werden, womit ein weiteres Mittel zur Beeinflussung und Einstellung des mittleren Molekulargewichtes des entstehenden Polymeren zur Verfügung steht. Im allgemeinen wird die Polymerisation in Abhängigkeit von der Katalysatormenge und der Reaktionstemperatur beim chargenweisen Verfahren während eines Zeitraumes von 0,5 bis 50 Stunden, vorzugsweise von 1 bis 10 Stunden und besonders bevorzugt von 1 bis 8 Stunden durchgeführt. Beim kontinuierlichen Verfahren werden üblicherweise Verweilzeiten von 1 bis 8 und vorzugsweise von 2 bis 5 Stunden eingestellt. Zu Beginn der kontinuierlichen Umsetzung benötigt das beschriebene Reaktionssystem eine gewisse Zeit bis sich ein stationäres Gleichgewicht eingestellt hat und während der es vorteilhaft sein kann, den Auslaß 18 mit Hilfe der Steuervorrichtung 19 geschlossen zu halten, also keine Produktlösung aus der Reaktionsapparatur auszutragen.

Die Katalysatorphase verbleibt in der Reaktionsapparatur und wird entsprechend den Katalysatorverlusten, die durch den Austrag geringer Katalysatormengen mit der Produkt-haltigen Oberphase entstehen, laufend durch Zufuhr neuen und/oder gegebenenfalls durch die Rückführung des ausgetragenen Katalysators ergänzt.

Wird zur Herstellung der Poly-THF-Monoether ein Heteropolysäure-Heterogenkatalysator verwendet, kann dieser als Suspensionskatalysator, vorzugsweise aber als Festbettkatalysator eingesetzt werden. Bei Anwendung eines Festbettkatalysators kann die Reaktionsmischung in der Sumpf- oder Rieselfahrweise über den Heteropolysäure-Heterogenkatalysator geleitet werden.

Das erfindungsgemäße Verfahren wird vorteilhaft unter einer Inertgasatmosphäre durchgeführt, wobei beliebige Inertgase, wie Stickstoff oder Argon, verwendet werden können. Die Reaktanten werden vor ihrer Verwendung von gegebenenfalls darin enthaltenem Wasser und Peroxiden befreit.

Der Zusatz von unter den Reaktionsbedingungen inerten, organischen Lösungsmitteln, beispielsweise aliphatischen und aromatischen Kohlenwasserstoffen sowie halogenierten Kohlenwasserstoffen ist möglich und kann sich dahingehend vorteilhaft auswirken, daß die Phasentrennung von Katalysator- und Oberphase erleichtert wird. In der Regel dient im erfindungsgemäßen Verfahren das Monomere sowohl als Reaktant als auch als Lösungsmittel.

Die Aufarbeitung der Polymerisat-haltigen oberen Phase kann z.B. auf die Weise erfolgen, daß man darin enthaltene Heteropolysäure-Spuren durch Zusatz einer Base, beispielsweise Alkalimetall- oder Erdalkalimetall-Hydroxidlösungen, Ammoniak, Alkalimetall- oder Erdalkalimetallcarbonatlösungen oder -hydrogencarbonatlösungen neutralisiert, das darin enthaltene Monomer abdestilliert und den im Destillationsrückstand verbliebenen Polyoxyalkylenglykol-Monoether zur Abtrennung ausgefallener Salze filtriert. Das bei der Destillation zurückgewonnene Monomer kann selbstverständlich wieder in die Umsetzung zurückgeführt werden.

Nach dem erfindungsgemäßen Verfahren können Polyoxyalkylenglykol-Monoether von einwertigen Alkoholen und insbesondere Poly-THF-Monoether von einwertigen Alkoholen wirtschaftlich und in guter Ausbeute, selektiv und mit einer engen Molekulargewichtsverteilung sowie in reiner Form mit niederen Farbzahlen erhalten werden. Die erfindungsgemäß herstellbaren Monoether finden beispielsweise zur Herstellung spezieller Polyurethane (JP-A 105 029/1988) Verwendung und werden außerdem für spezielle Schmieröle (EP-A 336 171), als Zusatz für Motorenöle (JP-A 159 411/1979) sowie als Spinnöle (JP-A 211 371/1988) benutzt.

Da die nach dem erfindungsgemäßen Verfahren erhältlichen Polyoxyalkylenglykol-Monoether in sehr reiner Form und mit einer engen Molekulargewichtsverteilung entstehen, wobei ihr mittleres Molekulargewicht $M_n$ im erfindungsgemäßen Verfahren gezielt eingestellt werden kann, kann es lohnend sein, aus diesen Polyoxyalkylenglykol-Monoethern die entsprechenden Polyoxyalkylenglykole, hoher Reinheit, definierten mittleren Molekulargewichts und enger Molekulargewichtsverteilung, durch die schonende Hydrolyse der Monoether-Gruppierung, z.B. mit Hilfe wäßriger Säuren, freizusetzen. Besonders geeignet zu diesem Zweck sind die Polyoxyalkylenglykol-Mono-tert.-butylether und insbesondere die Poly-THF-Mono-tert.-butylether der mittleren Molmassen von 500 bis 3500.

Beispiele

Die mittleren Molmassen ($M_n$) der gemäß den Beispielen hergestellten Polymeren wurden mittels Gelpermeationschromatographie bestimmt, wobei ein standardisiertes Polystyrol zur Eichung verwendet wurde. Aus den erhaltenen Chromatogrammen wurde das Zahlenmittel $M_n$ nach der Gleichung

$$M_n = \frac{\Sigma\, c_i}{\Sigma \dfrac{c_i}{M_i}}$$

berechnet, in der $c_i$ für die Konzentration der einzelnen Polymerspezies i im erhaltenen Polymergemisch steht und in der $M_i$ das Molekulargewicht der einzelnen Polymerspezies i bedeutet. Die Molekulargewichtsverteilung, im folgenden als Dispersität D bezeichnet, wurde aus dem Verhältnis von Gewichtsmittel des Molekulargewichts ($M_w$) und Zahlenmittel des Molekulargewichtes ($M_n$) nach der Gleichung

$$\frac{M_w}{M_n} = D$$

errechnet. Das Gewichtsmittel $M_w$ wurde aus den erhaltenen Chromatogrammen mit Hilfe der Formel

$$M_w = \frac{\Sigma\, c_i\, M_i}{\Sigma\, c_i}$$

bestimmt. Die zur Bestimmung der Dispersität herangezogenen Proben waren nicht wie allgemein üblich einer vorherigen Kurzweg-Destillation zur Entfernung flüchtiger, kurzkettiger Polymere unterzogen worden, weshalb ein höherer Wert für D ermittelt wurde, als er nach einer vorausgegangenen Kurzweg-Destillation zu erwarten gewesen wäre.

Alle eingesetzten Reaktanten waren wasser- und peroxidfrei.

Beispiel 1

100 g THF, 1,3 g Isopropanol und 50 g getrocknete Dodecawolframatophosphorsäure wurden in einem Glaskolben mit Rührer und Rückflußkühler 4 Stunden in einer Argonatmosphäre unter starkem Rühren auf 60°C erhitzt. Nach dem Abkühlen auf Raumtemperatur wurde die Reaktionsmischung in zwei flüssige Phasen separiert und aus der oberen Phase THF und Isopropanol abdestilliert. Es blieben 20 g eines farblosen, viskosen Polymers zurück. Der gebildete Polyoxytetramethylenglykol-Monoisopropylether hatte ein mittleres Molekulargewicht ($M_n$) von 1900 und eine Dispersität von 1,9.

Beispiel 2

100 g THF, 1,6 g Butanol-2 und 50 g getrocknete Dodecamolybdatophosphorsäure wurden in einem Glaskolben mit Rührer und Rückflußkühler 5 Stunden in einer Argonatmosphäre und unter starkem Rühren auf 50°C erhitzt. Nach dem Abkühlen auf Raumtemperatur wurde die Reaktionsmischung in zwei flüssige Phasen separiert und aus der oberen Phase THF und Butanol-2 abdestilliert. Es blieben 25 g eines farblosen, viskosen Polymers zurück. Der gebildete Poly-THF-Mono-2-butylether hatte ein mittleres Molekulargewicht von 2100 und eine Dispersität von 1,8.

Beispiel 3

100 g THF, 2,9 g n-Octanol und 50 g getrocknete Dodecawolframatophosphorsäure wurden in einem Glaskolben mit Rührer und Rückflußkühler 6 Stunden in einer Argonatmosphäre unter starkem Rühren auf 60°C erhitzt. Nach dem Abkühlen auf Raumtemperatur wurde die Reaktionsmischung in zwei flüssige Phasen separiert und aus der oberen Phase THF und n-Octanol abdestilliert. Es blieben 21 g eines farblosen, viskosen Polymers zurück. Der gebildete Poly-THF-Monooctylether hatte ein mittleres Molekulargewicht von 1500 und eine Dispersität von 1,9.

Beispiel 4

100 g THF, 2,2 g Cyclohexanol und 50 g getrocknete Dodecawolframatophosphorsäure wurden in einem Glaskolben mit Rührer und Rückflußkühler 4 Stunden in einer Argonatmosphäre und unter starkem Rühren auf 60°C erhitzt. Nach dem Abkühlen auf Raumtemperatur wurde die Reaktionsmischung in zwei flüssige Phasen separiert und aus der oberen Phase THF und Cyclohexanol abdestilliert. Es blieben 25 g eines farblosen, viskosen Polymers zurück. Der gebildete Poly-THF-Monocyclohexylether hatte ein mittleres Molekulargewicht von 1800 und eine Dispersität von 1,9.

Beispiel 5

100 g THF, 5,5 g n-Hexadecanol und 50 g getrocknete Dodecawolframatophosphorsäure wurden in einem Glaskolben mit Rührer und Rückflußkühler 4 Stunden in einer Argonatmosphäre unter starkem Rühren auf 60°C erhitzt. Nach dem Abkühlen auf Raumtemperatur wurde die Reaktionsmischung in zwei flüssige Phasen separiert und aus der oberen Phase THF und n-Hexadecanol abdestilliert. Es blieben 35 g eines farblosen, viskosen Polymers zurück. Der gebildete Poly-THF-Monohexadecylether hatte ein mittleres Molekulargewicht von 3600.

Beispiel 6

100 g THF, 1,0 g Ethanol und 50 g getrocknete Dodecawolframatophosphorsäure wurden in einem Glaskolben mit Rührer und Rückflußkühler 4 Stunden in einer Argonatmosphäre und unter starkem Rühren auf 60°C erhitzt. Nach dem Abkühlen auf Raumtemperatur wurde die Reaktionsmischung in zwei flüssige Phasen separiert und aus der oberen Phase THF und Ethanol abdestilliert. Es blieben 23 g eines farblosen, viskosen Polymers zurück. Der gebildete Poly-THF-Monoethylether hatte ein mittleres Molekulargewicht von 1100 und eine Dispersität von 1,7.

Beispiel 7

1000 g THF, 16 g Methanol und 500 g getrocknete Dodecawolframatophosphorsäure wurden in einem Glaskolben mit Rührer und Rückflußkühler 4 Stunden in einer Argonatmosphäre und unter starkem Rühren auf 60°C erhitzt. Anschließend wurde weitere 100 Stunden lang stündlich 250 g THF, enthaltend 1,6 Gew.-% Methanol, zudosiert und die gleiche Menge an organischer Phase abgenommen. Die organische Phase wurde mit dem gleichen Volumen n-Octan versetzt, wobei sich flüssige Heteropolysäure abschied. Nachdem sich die beiden Phasen getrennt hatten, wurde die organische Phase über Aktivkohle geleitet und die leicht flüchtigen Bestandteile wie THF, Methanol und Octan anschließend im Vakuum abgezogen. Der THF-Umsatz zu einem farblosen viskosen Polymer betrug durchschnittlich 23 %. Der entstandene Poly-THF-Monomethylether hatte ein mittleres Molekulargewicht von 1900. Die Dispersität des erhaltenen Produktes betrug ohne Kurzwegdestillation 1,7.

Beispiel 8

80 g THF, 20 g 1,4-Dioxan, 3,6 g Isopropanol und 50 g wasserfreie Dodecawolframatophosphorsäure wurden in einem Glaskolben mit Rührer und Rückflußkühler 4 Stunden in einer Argonatmosphäre unter starkem Rühren auf 60°C erhitzt. Nach Abkühlung auf Raumtemperatur wurde die Reaktionsmischung in zwei flüssige Phasen getrennt und aus der oberen Phase nicht umgesetztes THF, 1,4-Dioxan und Isopropanol abdestilliert. Es blieben 14 g eines klaren, viskosen Polymers zurück. Der gebildete, copolymere Polyoxyalkylenglykol-Monoisopropylether hatte ein mittleres Molekulargewicht von 1600.

Vergleichsbeispiel (zu JP-A 159 824 (1984))

100 g THF, 1,3 g Isopropanol und 50 g ungetrocknete Dodecawolframatophosphorsäure (Wassergehalt: 25 mol $H_2O$/mol Heteropolysäure) wurden in einem Glaskolben mit Rührer und Rückflußkühler 4 Stunden in einer Argonatmosphäre unter starkem Rühren auf 60°C erhitzt. Nach dem Abkühlen auf Raumtemperatur wurde die Reaktionsmischung mit 0,5 l Chloroform und 0,5 l Wasser vermischt und gerührt. Nach erfolgter Phasentrennung wurde das Lösungsmittel aus der Chloroform-Phase abdestilliert. Es blieb kein Rückstand.

Beispiel 9

Für die Polymerisation wurde ein Trägerkatalysator eingesetzt, der Dodecawolframatophosphorsäure auf Aktivkohle enthielt. Der Katalysator wurde folgendermaßen hergestellt: 150 g nicht getrocknete Dodecawolframatophosphorsäure wurden in 1500 g trockenem THF gelöst, mit 750 g Aktivkohle (Merck, Korngröße 0,5-0,85 mm) versetzt und zwei Stunden bei Raumtemperatur gerührt. Anschließend wurde der Trägerkatalysator abfiltriert und vor Einsatz solange bei 150°C unter reduziertem Druck getrocknet, bis kein Wasser mehr im Katalysator nachweisbar war. Der Trägerkatalysator enthielt 10 Gew.-% $H_3PW_{12}O_{40}$.
150 g des so hergestellten Katalysators wurden in einem ölbeheizten Doppelmantelrohr als Festbett angeordnet. über diesen Katalysator wurde eine Mischung von 330 g THF und 4 g Ethanol bei 60°C für acht Stunden im Kreis gefahren. Danach wurde die flüssige Phase im Vakuum eingeengt. Es verblieb ein klarer, viskoser Rückstand von 6,5 g.

**Patentansprüche**

1. Verfahren zur Herstellung von Polyoxyalkylenglykol-Monoethern von einwertigen Alkoholen mit mittleren Molmassen von 600 bis 3500 Dalton, dadurch gekennzeichnet, daß man Tetrahydrofuran oder Mischungen von Tetrahydrofuran mit insgesamt bis zu 95 mol-%, bezogen auf die eingesetzte Menge an Tetrahydrofuran, eines oder mehrerer Comonomere aus der Gruppe der cyclischen Ether oder Acetale in Abwesenheit von Wasser und in Gegenwart eines einwertigen Alkohols und eines gelösten, wasserfreien Heteropolysäure-Katalysators in einem homogenen flüssigen Zweiphasensystem polymerisiert.

2. Verfahren nach Anspruch 1, dadurch gekennzeichnet, daß man die Polymerisation diskontinuierlich in Gegenwart von 0,1 bis 15 mol eines einwertigen Alkohols/mol Heteropolysäure durchführt.

3. Verfahren nach Anspruch 1, dadurch gekennzeichnet, daß man die Heteropolysäure in Mengen von 10 bis 300 Gew.-Teilen pro 100 Gew.-Teile der verwendeten Monomeren einsetzt.

4. Verfahren nach Anspruch 1, dadurch gekennzeichnet, daß man die Polymerisation bei Temperaturen von 0 bis 150°C durchführt.

5. Verfahren nach Anspruch 1, dadurch gekennzeichnet, daß man die Umsetzung kontinuierlich durchführt und dabei eine Alkoholkonzentration von 0,1 bis 15 mol Alkohol/mol Heteropolysäure in der Katalysatorphase einstellt.

6. Verfahren nach Anspruch 5, dadurch gekennzeichnet, daß man die Umsetzung in einem mit einem Phasenabscheider kombinierten Rührkessel durchführt.

7. Verfahren nach Anspruch 1, dadurch gekennzeichnet, daß man die Umsetzung mit einem auf einem Träger aufgebrachten Heteropolysäure-Katalysator ausführt.

8. Polytetrahydrofuran-mono-tert.-butylether der mittleren Molmassen von 500 bis 3500.

## Claims

1. A process for the preparation of a polyoxyalkylene glycol monoether of a monohydric alcohol having an average molecular weight of from 600 to 3500 dalton, wherein tetrahydrofuran or a mixture of tetrahydrofuran with a total of not more than 95 mol %, based on the amount of tetrahydrofuran used, of one or more comonomers from the group consisting of the cyclic ethers and acetals, is polymerized in the absence of water and in the presence of a monohydric alcohol and of a dissolved, anhydrous heteropolyacid catalyst in a homogenous liquid two-phase system.

2. A process as claimed in claim 1, wherein the polymerization is carried out batchwise in the presence of from 0.1 to 15 mol of a monohydric alcohol per mol of heteropolyacid.

3. A process as claimed in claim 1, wherein the heteropolyacid is used in an amount of from 10 to 300 parts by weight per 100 parts by weight of the monomers used.

4. A process as claimed in claim 1, wherein the polymerization is carried out at from 0 to 150°C.

5. A process as claimed in claim 1, wherein the reaction is carried out continuously and an alcohol concentration of from 0.1 to 15 mol of alcohol per mol of heteropolyacid is established in the catalyst phase.

6. A process as claimed in claim 5, wherein the reaction is carried out in a stirred kettle combined with a phase separator.

7. A process as claimed in claim 1, wherein the reaction is carried out using a heteropolyacid catalyst applied to a carrier.

8. Polytetrahydrofuran mono-tert-butyl ether having an average molecular weight of from 500 to 3500.

## Revendications

1. Procédé de préparation de monoéthers de polyoxyalkylèneglycols d'alcools monohydroxylés possédant des masses molaires moyennes de 600 à 3500 Daltons, caractérisé en ce que l'on polymérise du tétrahydrofuranne, ou des mélanges de tétrahydrofuranne avec au total jusqu'à 95% molaires, par rapport à la quantité de tétrahydrofuranne mise en oeuvre, d'un ou plusieurs comonoméres appartenant au groupe formé par les acétals et les éthers cycliques, en l'absence d'eau et en présence d'un alcool monohydroxylé et d'un catalyseur à hétéropolyacide dépourvu d'eau, dissous, dans un système biphasé, liquide, homogène.

2. Procédé suivant la revendication 1, caractérisé en ce que l'on entreprend la polymérisation de manière discontinue, en présence de 0,1 à 15 moles d'un alcool monohydroxylé/mole d'hétéropolyacide.

3. Procédé suivant la revendication 1, caractérisé en ce que l'on utilise l'hétéropolyacide en proportions de 10 à 300 parties en poids par 100 parties en poids des monomères utilisés.

4. Procédé suivant la revendication 1, caractérisé en ce que l'on entreprend la polymérisation polymérisation, à des températures de 0 à 150°C.

5. Procédé suivant la revendication 1, caractérisé en ce que l'on entreprend la réaction en continu et on règle dans ce cas la concentration en alcool de 0,1 à 15 moles d'alcool/mole d'hétéropolyacide dans la phase catalytique.

6. Procédé suivant la revendication 5, caractérisé en ce que l'on entreprend la réaction dans un récipient agitateur combiné à un séparateur de phases.

7. Procédé suivant la revendication 1, caractérisé en ce que l'on entreprend la réaction, à l'aide d'un catalyseur à hétéropolyacide appliqué sur un support.

8. Ether mono-tert-butylique du polytétrahydrofuranne possédant une masse molaire de 500 à 3500.